# EUROPEAN PATENT APPLICATION

(11) **EP 3 843 487 A1**
(43) Date of publication of application: **30.06.2021**
(21) Application number: 18930886.9
(22) Date of filing: 20.08.2018
(51) Int. Cl.: H04W 72/10, H04W 4/46, H04W 72/04, H04W 92/18

(54) **TERMINAL DEVICE, BASE STATION DEVICE, AND COMMUNICATION SYSTEM**

(71) Applicant: FUJITSU LIMITED, Kanagawa 211-8588 (JP)
(72) Inventor: CHEN, Hongyang, Kawasaki-shi, Kanagawa 211-8588 (JP); WU, Jianming, Kawasaki-shi, Kanagawa 211-8588 (JP)
(74) Representative: Haseltine Lake Kempner LLP
(86) International application number: PCT/JP2018/030712
(87) International publication number: WO 2020/039487

(57) **Abstract**

A system includes: a terminal; another terminal; and a base station that performs terminal-to-base station communication with the terminal and the other terminal using a first radio resource, wherein: when the terminal has first data to be transmitted to the other terminal within a specified time period in terminal-to-terminal communication with which the terminal communicates with the other terminal using a second radio resource, the terminal transmits, to the base station, a change request for changing the first radio resource into the second radio resource; in response to the change request, the base station changes the first radio resource into the second radio resource, notifies the terminal and the other terminal of information on the second radio resource, and permits the terminal to use the second radio resource; and the terminal transmits the first data to the other terminal by using the second radio resource.

## Description

### FIELD

The embodiments discussed herein are related to a terminal device, a base-station device, and a communication system.

### BACKGROUND

The resources of current networks are mostly used for the traffic for mobile terminals (smartphones and feature phones). In the current trend, the traffic used by mobile terminals will continue to increase in the future.

In addition, as the services of the Internet of things (IoT) (for example, transportation systems, smart meters, monitoring systems for devices) spread, it is desired to support services having various kinds of allowable conditions. In this respect, the communication standards of the 5th generation mobile communication (5G or New Radio (NR)) are desired to have technologies to achieve a higher data rate, a larger capacity, and lower latency, in addition to the standard technologies (for example, NPL 2 to 13) of the 4th generation mobile communication (4G). Technical studies of the 5th generation communication standards are being conducted by the 3rd Generation Partnership Project (3GPP) working groups (for example, TSG-RAN WG1, TSG-RAN WG2, and others) (for example, NPL 14 to 39).

In order to support various kinds of services as described above, 5G implements enhanced Mobile Broadband (eMBB) for achieving a high-speed transmission and massive Machine Type Communications (MTC) that enable many IoT devices to be coupled simultaneously and also achieves high-reliability low-latency transmission. 5G is assumed to support many use cases classified into Ultra-Reliable and Low Latency Communication (URLLC).

The 3GPP working groups are also discussing device-to-device (D2D) communication. D2D communication is called, for example, sidelink communication and includes V2X. Examples of V2X include V2V (vehicle to vehicle) meaning communication between automobiles, V2P (vehicle to pedestrian) meaning communication between automobiles and pedestrians, and V2I (vehicle to infrastructure) meaning communication between automobiles and road infrastructures such as traffic signs. Specifications on V2X are described, for example, in NPL 1.

V2X in 4G has a mode that uses centralized resource allocation method (In-coverage RRC_CONNECTED UEs), which is called mode 3, and a mode using a decentralized resource allocation method (In-coverage RRC_IDLE UEs or out-of-coverage UEs), which is called mode 4.

In LTE sidelink communication, sidelink (SL) resources are allocated based on a resource pool. The resource pool is formed of the following:
- A "subframe pool" in the time domain including all the subframes used for transmitting and receiving SL; and
- A "resource block pool" which is a subset of resource blocks in a subframe pool, actually allocated to SL in the frequency domain.

In the time domain, the subframe pool is arranged according to a cyclic pattern determined (defined) by a bitmap. The length of the bitmap is, for example, fixed to 40 subframes for frequency division duplexing (FDD) and is a variable value from 4 to 42 for time division duplexing (TDD). The period (for communication) is, for example, defined by SL-PeriodComm that supports a selection value from 40 to 320 subframes. In the frequency domain, the resource block pool is defined by the parameters prb-Num, prb-Start, and prb-End. The parameters prb-Start and prb-End respectively indicate the first and last indexes of RB allocated to SL in a subframe. The parameter prb-Num indicates the number of allocated resource blocks. The parameters for resource pool allocation are periodically broadcasted by using system information block (SIB) transmitted by the eNB.

In LTE-V2X, the resource pool is defined by repeated bitmaps mapped on all the subframes excluding the downlink subframes and the sidelink synchronization subframes. The length of a bitmap in LTE-V2X may be, for example, 16, 20, or 100. In the case of the uplink subframe, the bitmap may indicate which subframes are used for LTE-V2X. For example, in the bitmap, 1 in a bit means that the corresponding subframe is available for V2X transmission and 0 means that the corresponding subframe is used for uplink transmission. With the use of bitmap information, the uplink subframes used for LTE-V2X indicate a resource pool. A terminal device may select a resource from the resource pool.

### SUMMARY

### TECHNICAL PROBLEM

However, in V2X (for example, NR-V2X), resources used for sidelink are, for example, part or all of the uplink resources or downlink resources in communication with the base-station device. Depending on the allocation conditions of sidelink resources, for example, even when sidelink data for which low latency is desired occurs in a terminal device, in some cases, no resource is available for sidelink, or resources for sidelink are insufficient, so that it is impossible to transmit the data immediately, and hence it is impossible to meet the desired latency.

In light of the above situation, a piece of the disclosure provides a terminal device, a base-station device, and a communication system capable of avoiding data transmission delay in V2X communication.

### SOLUTION TO PROBLEM

In an aspect, a terminal device in a communication system including the terminal device, another terminal device, and a base-station device that performs terminal-to-base station communication with the terminal device and the other terminal device, includes: a terminal-to-terminal communication unit that executes terminal-to-terminal communication for communicating with the other terminal device by using a radio resource for the terminal-to-terminal communication; a terminal-to-base station communication unit that executes the terminal-to-base station communication by using a radio resource for the terminal-to-base station communication other than the radio resource for the terminal-to-terminal communication; and a control unit that controls the terminal-to-terminal communication unit such that when the terminal device has first data that is to be transmitted to the other terminal device within a specified time period in the terminal-to-terminal communication, the terminal-to-terminal communication unit transmits the first data to the other terminal device by using a radio resource changed from the radio resource for the terminal-to-base station communication to the radio resource for the terminal-to-terminal communication.

### ADVANTAGEOUS EFFECTS OF INVENTION

Disclosed techniques make it possible to avoid data transmission delay in V2X communication.

### BRIEF DESCRIPTION OF DRAWINGS

FIG. 1 illustrates a configuration example of a communication system 10;
FIG. 2 illustrates a configuration example of a terminal device 100;
FIG. 3 illustrates a configuration example of a base-station device 200;
FIG. 4 illustrates an example of subframes in V2V;
FIG. 5 illustrates an example of changing a subframe type at an occurrence of urgent data;
FIG. 6 illustrates an example of a sequence at the time when urgent data occurs in a terminal device 100-1;
FIG. 7 illustrates an example of a flowchart of a sidelink-urgent-data occurrence process S100;
FIG. 8 illustrates an example of a flowchart of a sidelink allocation process S102;
FIG. 9 illustrates an example of a flowchart of a subframe-pattern change-notification reception process S104;
FIG. 10 illustrates an example of a flowchart of a subframe-for-use change-notification reception process S106;
FIG. 11 illustrates information elements of sidelink related information on the subframe and their descriptions;
FIG. 12 illustrates an example of symbols included in one subframe;
FIG. 13 illustrates a configuration example of a communication system 10 in a second embodiment;
FIG. 14 illustrates an example of a sequence at the time when urgent data occurs in a terminal device 100-1 in the second embodiment;
FIG. 15 illustrates an example of a flowchart of an out-of-communication-area sidelink-urgent-data occurrence process S200;
FIG. 16 illustrates an example of a sequence at the time when urgent data occurs in a terminal device 100-2 in a third embodiment;
FIG. 17 illustrates an example of a flowchart of an out-of-communication-area sidelink-urgent-data occurrence process S300;
FIG. 18 illustrates an example of a flowchart of an out-of-communication-area sidelink allocation process S302;
FIG. 19 illustrates an example of symbols included in one slot;
FIG. 20 illustrates configuration examples of slots; and
FIG. 21 illustrates configuration examples of slots.

### DESCRIPTION OF EMBODIMENTS

Hereinafter, present embodiments are described in detail with reference to the accompanying drawings. The issues and embodiments of the present specification are mere examples and not intended to limit the scope of the present disclosure. For example, when expressions described herein are different but technically equivalent, the techniques of the present disclosure may be applied even though the expressions are different, and these are not intended to limit the scope of the present disclosure.

### [First Embodiment]

A first embodiment is described below.

### <Configuration Example of Communication System>

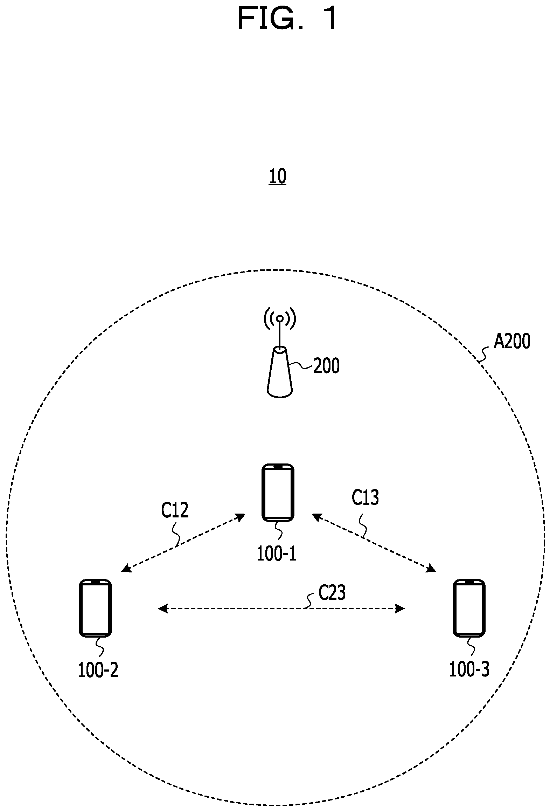

FIG. 1 illustrates a configuration example of a communication system 10. The communication system 10 includes terminal devices 100-1 to 100-3 and a base-station device 200. The communication system 10 supports, for example, the 5G communication standards.

The terminal devices 100-1 to 100-3 (hereinafter, also referred to as the terminal devices 100) are, for example, mobile terminals or computers. The terminal devices 100, for example, communicate with the base-station device 200 and download data or receive services.

The terminal devices 100-1 to 100-3 also perform radio couplings C12, C13, and C23 with one another without an intermediary of the base-station device 200 to perform radio communication between the terminal devices 100, which is called V2X (for example, in mode 3). The terminal devices 100-1 to 100-3 are, for example, mobile terminals each owned by a user driving a different automobile. The user uses the terminal device 100 and performs V2V communication to talk or to transmit or receive data. The terminal devices 100-1 to 100-3 are radio terminals each installed in a different automobile and transmit and receive traffic congestion information, accident information, and other information to and from one another. Hereinafter, V2V communication is also called terminal-to-terminal communication, and the terminal devices 100 performing terminal-to-terminal communication are called group terminals in some cases.

The base-station device 200 is a communication device that couples to the terminal devices 100 by radio and transmits and receives packets to and from the terminal devices 100. The base-station device 200, for example, transmits packets received from a terminal device 100 to a partner terminal with which the terminal device 100 is communicating, and the base-station device 200 also transmits received packets addressed to a terminal device 100 to the terminal device 100. The base-station device 200 is, for example, a gNodeB in 5G.

The base-station device 200 allocates radio resources that the terminal devices 100 use for V2V/V2X communication. The base-station device 200, for example, determines subframes to be used for sidelink and notifies the group terminals of information on the determined subframes (by broadcasting). Subframes may be read as slots.

The base-station device 200 has a communication area (or cell) A200 indicating an area within which the base-station device 200 is able to perform radio communication with the terminal devices 100. In the case where the terminal device 100 is positioned within the communication area A200, the terminal device 100 is able to receive information broadcasted by the base-station device 200 and perform radio communication with the base-station device 200. Hereinafter, communication between the terminal devices 100 and the base-station device 200 is also called terminal-to-base station communication.

### <Configuration Example of Terminal Device>

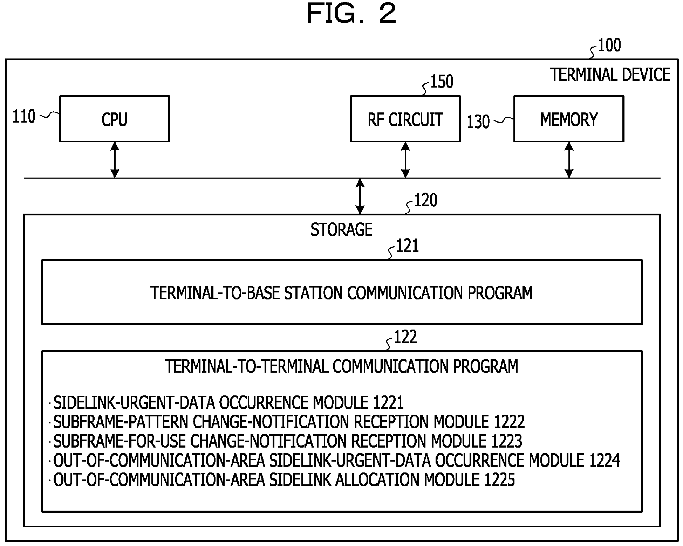

FIG. 2 illustrates a configuration example of the terminal device 100. The terminal device 100 includes a central processing unit (CPU) 110, a storage 120, a memory 130, and a radio frequency (RF) circuit 150.

The storage 120 is an auxiliary storage device, such as a flash memory, a hard disk drive (HDD), or a solid-state drive (SSD), for storing programs and data. The storage 120 stores a terminal-to-base station communication program 121 and a terminal-to-terminal communication program 122.

The memory 130 is an area into which programs stored in the storage 120 are loaded. The memory 130 is also used as an area in which programs store data.

The RF circuit 150 is an interface that couples to the base-station device 200 or another terminal device 100 by radio and performs communication. The RF circuit 150, for example, has an antenna and performs radio communication by transmitting and receiving packets.

The CPU 110 is a processor that loads programs stored in the storage 120 into the memory 130 and executes the loaded programs to implement processes.

The CPU 110 executes the terminal-to-base station communication program 121 to implement a terminal-to-base station communication unit and performs a terminal-to-base station communication process. The terminal-to-base station communication process is a process for performing terminal-to-base station communication with the base-station device 200. In the terminal-to-base station communication process, the terminal device 100 transmits and receives packets to and from the base-station device 200 and obtains notification information broadcasted by the base-station device 200.

The CPU 110 executes the terminal-to-terminal communication program 122 to implement the terminal-to-terminal communication unit and a control unit and performs a terminal-to-terminal communication process. The terminal-to-terminal communication process is a process for performing terminal-to-terminal communication (for example, V2V communication) which is radio communication with another terminal device (a partner terminal device) 100. In the terminal-to-terminal communication process, the terminal device 100 transmits and receives packets to and from the partner terminal device. The terminal-to-terminal communication process includes a process for the case where urgent data (first data) desired to be transmitted within a specified time period occurs. Urgent data, for example, is data for which low latency is desired and data having high urgency.

The CPU 110 executes a sidelink-urgent-data occurrence module 1221 included in the terminal-to-terminal communication program 122 to implement the control unit and performs a sidelink-urgent-data occurrence process. The sidelink-urgent-data occurrence process is a process for the case where urgent data has occurred as data to be transmitted by sidelink (for example, terminal-to-terminal communication).

The CPU 110 executes a subframe-pattern change-notification reception module 1222 included in the terminal-to-terminal communication program 122 to implement the terminal-to-terminal communication unit and performs a subframe-pattern change-notification reception process. The subframe-pattern change-notification reception process is a process for receiving a changed subframe pattern from another terminal device 100 and stores the subframe pattern. The subframe pattern indicates, for example, a pattern of the purposes of subframes to be used, such as subframes for sidelink, subframes for uplink, subframes for downlink, subframes for unknown (undefined) use, or others.

In some cases, the subframe-pattern change-notification reception module 1222 is included in the terminal-to-base station communication program 121. The CPU 110 executes the subframe-pattern change-notification reception module 1222 included in the terminal-to-base station communication program 121 to implement the terminal-to-base station communication unit and performs the subframe-pattern change-notification reception process. The subframe-pattern change-notification reception process is a process for receiving a subframe-pattern change notification broadcasted by the base-station device 200 and obtaining a changed subframe pattern.

The CPU 110 also executes a subframe-for-use change-notification reception module 1223 included in the terminal-to-terminal communication program 122 to implement the terminal-to-terminal communication unit and performs a subframe-for-use change-notification reception. The subframe-for-use change-notification reception process is a process for receiving a subframe-for-use change-notification from another terminal device 100 and changing the subframe to be used for sidelink.

In some cases, the subframe-for-use change-notification reception module 1223 is included in the terminal-to-base station communication program 121. The CPU 110 executes the subframe-for-use change-notification reception module 1223 included in the terminal-to-base station communication program 121 to implement the terminal-to-base station communication unit and performs the subframe-for-use change-notification reception process. The subframe-for-use change-notification reception process is a process for receiving the subframe-for-use change-notification broadcasted by the base-station device 200 and changing the subframe to be used for sidelink.

The CPU 110 also executes an out-of-communication-area sidelink-urgent-data occurrence module 1224 included in the terminal-to-terminal communication program 122 to implement the control unit and performs an out-of-communication-area sidelink-urgent-data occurrence process. The out-of-communication-area sidelink-urgent-data occurrence process is a process for the case where urgent data occurs as data to be transmitted by sidelink when the terminal device 100 is out of the communication area and unable to perform radio communication with the base-station device 200.

The CPU 110 also executes an out-of-communication-area sidelink allocation module 1225 included in the terminal-to-terminal communication program 122 to implement the control unit and performs an out-of-communication-area sidelink allocation process. The out-of-communication-area sidelink allocation process is a process for the case of receiving an out-of-communication-area sidelink allocation request from another terminal device 100 when the terminal device 100 is out of the communication area and unable to perform radio communication with the base-station device 200. The out-of-communication-area sidelink allocation process is a process for executing a sidelink subframe allocation process, substituting for the base-station device 200, the sidelink subframe allocation process been executed by the base-station device 200, for example, in the case where the terminal device 100 is within the communication area of the base-station device 200.

### <Configuration Example of Base-Station Device>

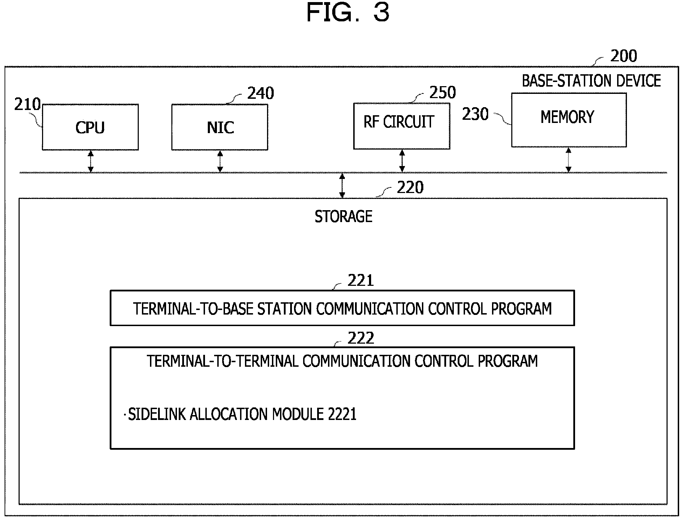

FIG. 3 illustrates a configuration example of the base-station device 200. The base-station device 200 includes a CPU 210, a storage 220, a memory 230, a network interface card (NIC) 240, and an RF circuit 250.

The storage 220 is an auxiliary storage device, such as a flash memory, an HDD, or an SSD, for storing programs and data. The storage 220 stores a terminal-to-base station communication control program 221 and a terminal-to-terminal communication control program 222.

The memory 230 is an area into which programs stored in the storage 220 are loaded. The memory 230 is also used as an area in which programs store data.

The NIC 240 is a device that couples to a control device (not-illustrated) and other devices to communicate with those devices. The NIC 240 may couple to other devices via a hub or a switch.

The RF circuit 250 is an interface that couples to the terminal devices 100 by radio and performs communication. The RF circuit 250, for example, has an antenna and couples to the terminal devices 100 by radio within the communication area and performs terminal-to-base station communication.

The CPU 210 is a processor that loads programs stored in the storage 220 into the memory 230 and executes the loaded programs to implement processes.

The CPU 210 executes a terminal-to-base station communication control program 221 to implement a terminal-to-base station communication control unit and performs a terminal-to-base station communication control process. The terminal-to-base station communication control process is a process for controlling terminal-to-base station communication. In the terminal-to-base station communication control process, the base-station device 200 transmits and receives packets to and from the terminal devices 100 and notifies the terminal devices 100 of notification information.

The CPU 210 executes the terminal-to-terminal communication control program 222 to implement the terminal-to-terminal communication control unit and performs a terminal-to-terminal communication control process. The terminal-to-terminal communication control process is a process for controlling terminal-to-terminal communication. In the terminal-to-terminal communication control process, the base-station device 200 changes a radio resource (radio resource for terminal-to-terminal communication) to be used for the terminal-to-terminal communication to be performed by a terminal device 100 and another terminal device 100 (or other terminal devices 100) and notifies the terminal device 100 and the other terminal device(s) 100 of information on the changed radio resource. In the terminal-to-terminal communication control process, the base-station device 200 permits the terminal device 100 to use the changed radio resource.

The CPU 210 executes a sidelink allocation module 2221 included in the terminal-to-terminal communication control program 222 to implement the terminal-to-terminal communication control unit and performs a sidelink allocation process. The sidelink allocation process is a process for changing at least one of the radio resources for terminal-to-base station communication to a radio resource for terminal-to-terminal communication.

### <Communication Process in V2V>

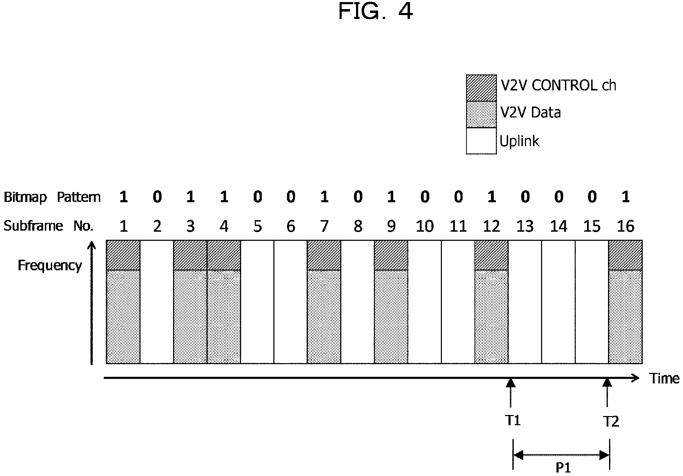

FIG. 4 illustrates an example of subframes in V2V. The "Subframe No." indicates subframe numbers. The "Bitmap Pattern" is a bitmap pattern indicating whether each of the 16 subframes is a subframe to be used for V2V communication (hereinafter also called a sidelink subframe) or an uplink subframe to be used for the communication with the base-station device 200 (hereinafter also called an uplink subframe). The symbol "1" indicates a sidelink subframe, and the symbol "0" indicates an uplink subframe. In other words, for example, the bitmap pattern indicates a subframe pattern including 16 subframes.

The subframe pattern, for example, is determined by the base-station device 200 and communicated (broadcasted) to the terminal devices 100 in the communication area. The subframe pattern, for example, is broadcasted (communicated) by using a physical downlink control channel (PDCCH).

The terminal device 100 transmits and receives subframes, according to the subframe pattern illustrated in FIG. 4. Sidelink subframes are, for example, the subframes with subframe numbers 1, 3, 4, 7, 9, 12, and 16. Hereinafter, a subframe with a subframe number x (x is an integer) is also called a subframe x.

The sidelink subframe includes, for example, a V2V control channel (V2V control ch) and a V2V data channel (V2V Data). The V2V control ch is transmitted, for example, using the physical sidelink control channel (PSCCH). The V2V Data is transmitted through the physical sidelink shared channel (PSSCH).

For example, there are cases where the terminal device 100-1 and the terminal device 100-2 perform V2V communication, and the terminal device 100-1 transmits data to the terminal device 100-2. The terminal device 100-1 uses some of or all of the sidelink subframes 1, 3, 4, 7, 9, 12, and 16 to transmit data to the terminal device 100-2. The sidelink subframes that the terminal device 100-1 is able to use are determined, for example, by the base-station device 200 and communicated to the terminal device 100-1.

The terminal device 100-2 listens for the sidelink subframes 1, 3, 4, 7, 9, 12, and 16, and in the case where the received subframes are addressed to the terminal device 100-2, the terminal device 100-2 obtains the data. Through this process, data is transmitted from the terminal device 100-1 to the terminal device 100-2.

However, there is a case where urgent data occurs at timing T1 in the terminal device 100-1. Even if the urgent data occurs at timing T1, the terminal device 100-1 is unable to transmit the urgent data until the next transmission, which is the sidelink subframe 16. In other words, for example, for the terminal device 100, transmission of the urgent data is delayed by period P1 from timing T1 when the urgent data occurs until timing T2 when the subframe 16 is transmitted. The length of this period P1 sometimes does not meet an allowable delay for urgent data, and thus an urgent-data transmission delay occurs.

To address this issue, the terminal device 100-1 in the first embodiment requests the base-station device 200 to allocate a new sidelink subframe to avoid the situation of urgent-data transmission delay.

### <Process at Occurrence of Urgent Data>

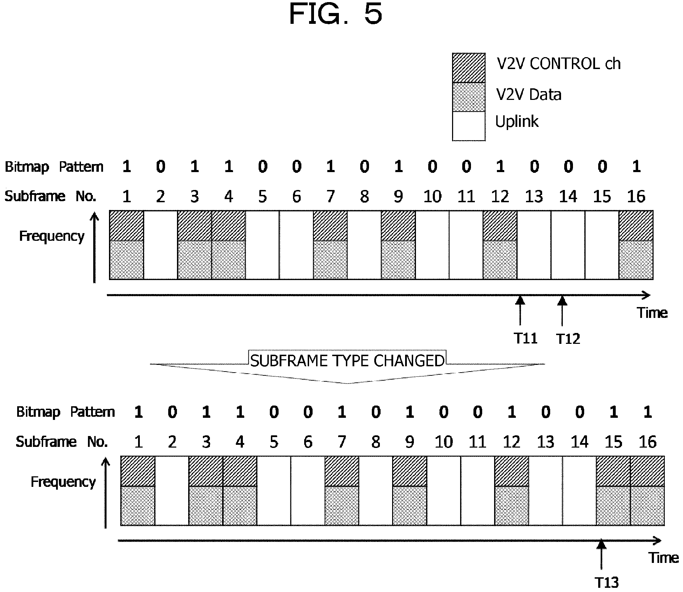

FIG. 5 illustrates an example of changing a subframe type at an occurrence of urgent data. FIG. 5 illustrates an example of subframe patterns before and after the change. In the subframe pattern after the change, as compared to the subframe pattern before the change, subframe 15 is changed from an uplink subframe (a radio resource for terminal-to-base station communication) to a sidelink subframe (a radio resource for terminal-to-terminal communication).

In FIG. 5, urgent data occurs in the terminal device 100-1 at timing T11. Then, the terminal devices 100-1 to 100-3 receive a new subframe pattern (a bitmap pattern after the change) at timing T12 and recognize the new subframe pattern. The terminal device 100-1 is notified by the base-station device 200 at around timing T12 that use of the changed sidelink subframe 15 is permitted. Then, the terminal device 100-1 uses sidelink subframe 15 to perform transmission to the terminal devices 100-2 and 100-3 at timing T13. It is possible to change a resource pool dynamically using a bitmap and reconfigure the resource pool for NR V2X. In this example, the size of the resource pool is changed.

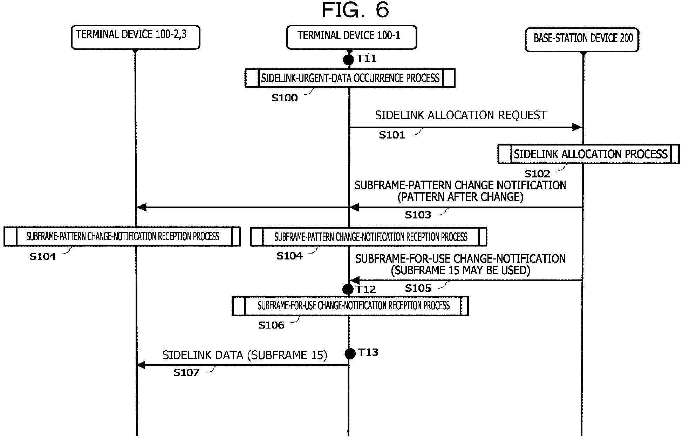

FIG. 6 illustrates an example of a sequence at the time when urgent data occurs in the terminal device 100-1. The sequence in FIG. 6 corresponds to FIG. 5.

When urgent data for sidelink occurs at timing T11 in the terminal device 100-1, the terminal device 100-1 performs the sidelink-urgent-data occurrence process (S100).

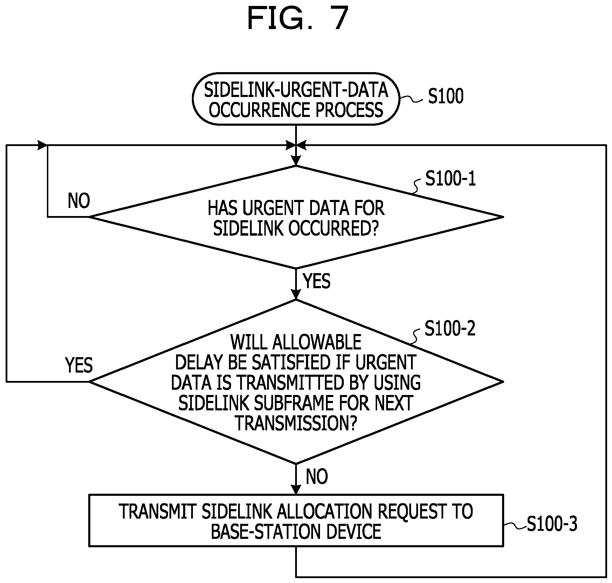

FIG. 7 illustrates an example of a flowchart of the sidelink-urgent-data occurrence process S100. The terminal device 100 listens for an occurrence of urgent data for sidelink (No at S100-1).

When urgent data for sidelink occurs (Yes at S100-1), the terminal device 100 determines whether it is possible to satisfy the allowable delay for the urgent data even if the urgent data is transmitted by using the sidelink subframe for the next transmission (S100-2). The allowable delay means, for example, an allowable condition for the time period within which the data is to be transmitted, allowed by the application or the user that transmits the data. Data having allowable delay, for example, is desired to be transmitted within a specified time period, and if the data is not transmitted within the specified time period, the data transmission is regarded as delayed in some cases.

In the case where the terminal device 100 determines that the allowable delay will be satisfied (Yes at S100-2), the terminal device 100 returns to the listening process S100-1.

In the case where the terminal device 100 determines that the allowable delay will not be satisfied (No at S100-2), the terminal device 100 transmits a sidelink allocation request to the base-station device 200 (S100-3) and returns to the listening process S100-1.

The sidelink allocation request is a message for requesting the base-station device 200 to allocate a new sidelink subframe (or change a subframe for terminal-to-base station communication into a sidelink subframe). The sidelink allocation request is transmitted, for example, using sidelink control information (sideLink_uplink control information: SL_UCI) as a scheduling request (SR).

The sidelink allocation request message includes, for example, the size of urgent data. The base-station device 200 may determine the number of sidelink subframes to newly allocate, depending on the size of urgent data.

With reference to the sequence of FIG. 6 again, the terminal device 100-1 determines in the sidelink-urgent-data occurrence process S100 that the allowable delay will not be satisfied if the urgent data is transmitted in sidelink subframe 16 which is the next transmission (No at S100-2 in FIG. 7), the terminal device 100-1 transmits a sidelink allocation request to the base-station device 200 (S101, S100-3 in FIG. 7).

The base-station device 200, receiving the sidelink allocation request (S101), performs the sidelink allocation process (S102).

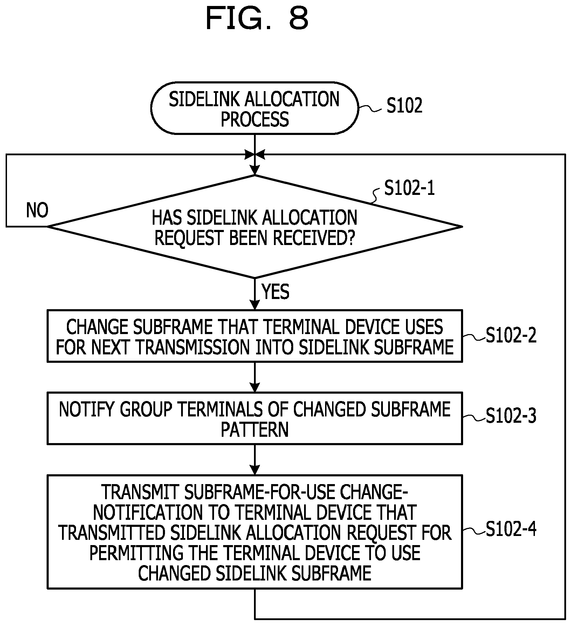

FIG. 8 illustrates an example of a flowchart of the sidelink allocation process S102. The base-station device 200 listens for reception of a sidelink allocation request (No at S102-1).

The base-station device 200, receiving a sidelink allocation request (Yes at S102-1), changes the subframe that the terminal device 100 uses for the next transmission into a sidelink subframe (S102-2).

The subframe that the terminal device 100 uses for the next transmission means, for example, the first subframe that the terminal device 100 uses after the terminal device 100 recognizes that the subframe pattern has been changed. For example, in the case where the terminal device 100 in FIG. 5 recognizes a change of the subframe pattern at timing T12, the subframe for the next transmission is subframe 15. The base-station device 200 determines the subframe that the terminal device 100 uses for the next transmission, considering the processes performed in the base-station device 200 itself, the notification timing of the subframe change, and other factors.

Then, the base-station device 200 notifies the group terminals of a changed subframe pattern (S102-3). The group terminals mean the terminal device 100 that transmitted the sidelink allocation request and the terminal device 100 performing V2V communication with the terminal device 100 that transmitted the sidelink allocation request. Note that the base-station device 200 may transmits this notification to all the terminal devices 100 in the communication area.

Then, the base-station device 200 transmits a subframe-for-use change-notification to permit the terminal device 100 that transmitted the sidelink allocation request to use the changed sidelink subframe (S102-4) and returns to the listening process S102-1.

With reference to the sequence of FIG. 6 again, the base-station device 200 notifies the terminal devices 100-1 to 100-3 at timing T12 of the subframe pattern in which subframe 15 that the terminal device 100-1 uses for the next transmission has been changed into a sidelink subframe in the sidelink allocation process S102 (S102-2 in FIG. 8) (S103, S102-3 in FIG. 8).

The terminal devices 100-1 to 100-3, receiving the subframe-pattern change notification (S103), performs the subframe-pattern change-notification reception process (S104).

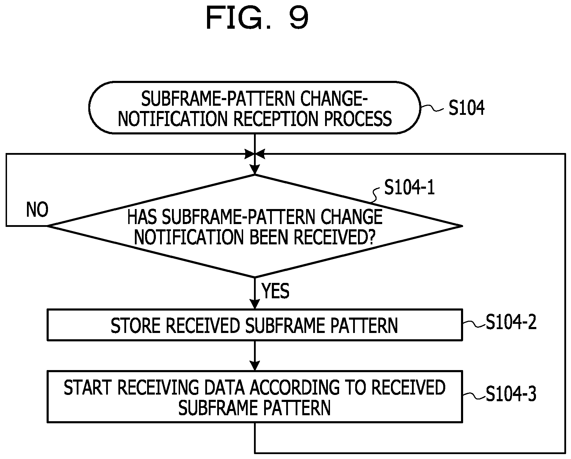

FIG. 9 illustrates an example of a flowchart of the subframe-pattern change-notification reception process S104. The terminal device 100 listens for reception of a subframe-pattern change notification (No at S104-1).

The terminal device 100, receiving the subframe-pattern change notification (Yes at S104-1), stores the received subframe pattern (S104-2) and starts receiving sidelink subframes, using the received subframe pattern (S104-3), and returns to the listening process S104-1.

With reference to the sequence of FIG. 6 again, the terminal devices 100-1 to 100-3, in the subframe-pattern change-notification reception process S104, start receiving sidelink subframes, using the subframe pattern after the change (S104-3 in FIG. 9).

Then, the base-station device 200 transmits the subframe-for-use change-notification to permits use of sidelink subframe 15 to the terminal device 100-1 (S105, S102-4 in FIG. 8). The terminal device 100-1, receiving the subframe-for-use change-notification (S105), performs the subframe-for-use change-notification reception process (S106).

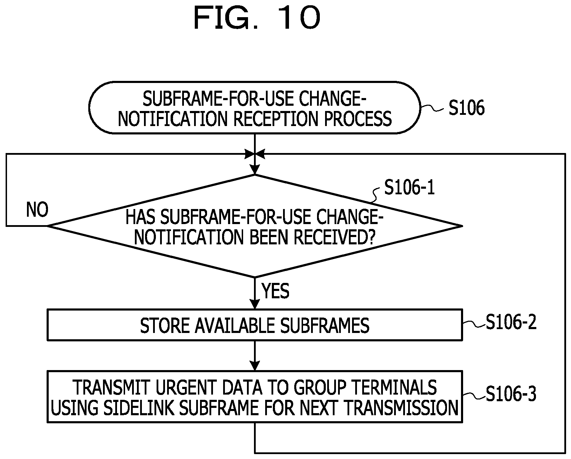

FIG. 10 illustrates an example of a flowchart of the subframe-for-use change-notification reception process S106. The terminal device 100 listens for reception of a subframe-for-use change-notification (No at S106-1).

The terminal device 100, receiving a subframe-for-use change-notification (Yes at S106-1), stores available subframes (including sidelink subframes) (S106-2). Then, the terminal device 100 uses the sidelink subframe for the next transmission to transmit the urgent data to the group terminals (S106-3) and returns to the listening process S106-1.

With reference to the sequence of FIG. 6 again, the terminal device 100-1, in the subframe-for-use change-notification reception process S106, uses sidelink subframe 15 in the changed subframe pattern to transmit the urgent data to the terminal devices 100-2 and 100-3 at timing T13 (S107, S106-3 in FIG. 10).

In the first embodiment, when urgent data occurs in the terminal device 100-1, the terminal device 100-1 requests the base-station device 200 to allocate a new sidelink subframe and uses an allocated new sidelink subframe to transmit the urgent data. This configuration enables the terminal device 100-1 to transmit urgent data at an early timing and avoid transmission delay of the data.

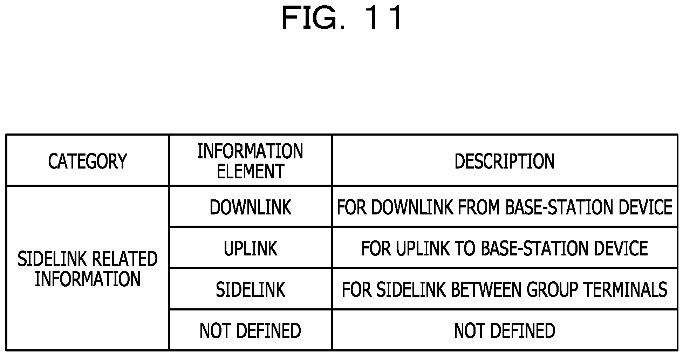

FIG. 11 illustrates the information elements of sidelink related information on the subframe and their descriptions. The information elements include, for example, "downlink", "uplink", "sidelink", and "unknown". The information element "downlink" indicates a subframe used for downlink (in the direction from the base-station device 200 to the terminal device 100) in communication with the base-station device. The information element "uplink" indicates a subframe used for uplink (in the direction from the terminal device 100 to the base-station device 200) in communication with the base-station device. The information element "sidelink" indicates a subframe used for sidelink in V2V communication. The information element "unknown" indicates a subframe for which the intended use has not been defined and that may be used for any purposes of "uplink", "downlink", and "sidelink".

In the communication system 10, for example, "unknown" subframes may be used for sidelink. The terminal device 100 may use, as sidelink subframes, "unknown" subframes that are not defined as "sidelink" for example.

The communication system 10 may define "sidelink" to allocate sidelink subframes.

The base-station device 200, in the sidelink allocation process S102, may change "uplink", "downlink", and "unknown" subframes into "sidelink" subframes. As described above, in the case where "unknown" subframes are used for sidelink, the base-station device 200, in the sidelink allocation process S102, may change "uplink" and "downlink" subframes into "unknown" subframes.

### <Modification Example>

Although the base-station device 200, in the sidelink allocation process S102, changes a sidelink resource in the unit of a subframe, the change may be made in the unit of a symbol.

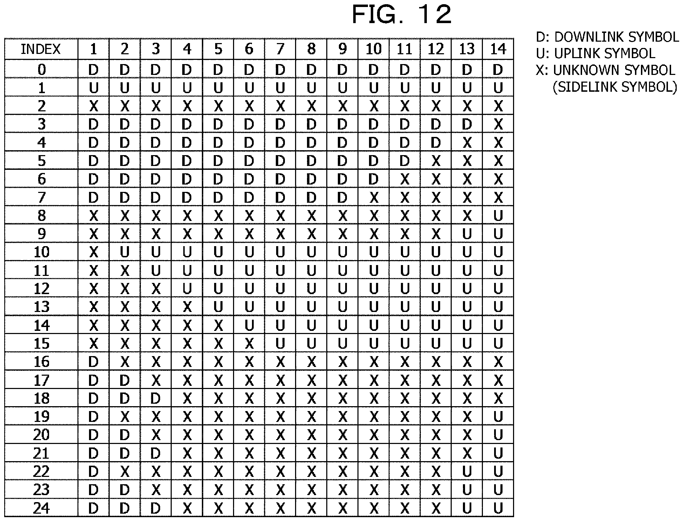

FIG. 12 illustrates an example of symbols included in one subframe. The letters "D", "U", and "X" indicate a downlink symbol, an uplink symbol, and an unknown symbol, respectively. Note that unknown symbols are used as sidelink symbols. The numbers "0" to "24" in the left axis of FIG. 12 indicate index numbers. The numbers "1" to "14" in the upper axis of FIG. 12 indicate symbol numbers in one subframe. Hereinafter, in some cases, the index having an index number of y (y is an integer) is expressed as index y, and the symbol having a symbol number of z (z is an integer) is expressed as symbol z.

The base-station device 200 may notify the terminal devices 100 of an index to be used to set a sidelink symbol. For example, the base-station device 200 changes index 14 before a change into index 15. From this change, symbol 6 becomes a new sidelink symbol.

The base-station device 200 may change a subframe of index 1 in which all the symbols are used for uplink symbols into a subframe of index 2 to change the uplink subframe into a sidelink subframe.

The base-station device 200 may notify the terminal devices 100 of a changed subframe and a pattern of symbols by using the index number after the change.

Based on a changed slot format and flexible symbols for sidelink, the resource pool is dynamically changed to satisfy an important V2X transmission. The resource pool may be changed by using flexible symbols and/or by changing some uplink symbols for V2X communication to correct an imbalance in the number of symbols over slots. These symbols may be used for sidelink.

### [Second Embodiment]

Next, a second embodiment is described below.

### <Configuration Example of Communication System>

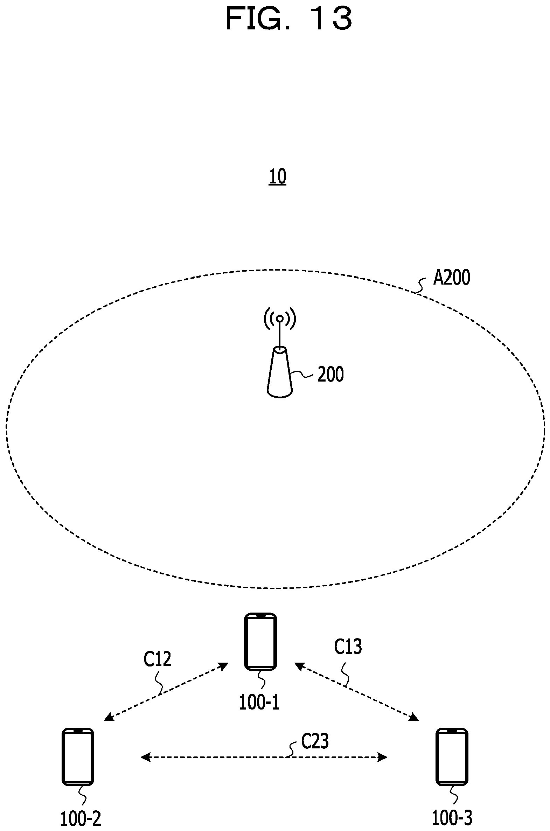

FIG. 13 illustrates a configuration example of a communication system 10 in a second embodiment. The communication system 10 includes terminal devices 100-1 to 100-3 and a base-station device 200.

The terminal devices 100-1 to 100-3 are not positioned within a communication area A200 of the base-station device 200. Hence, it is impossible for the terminal devices 100-1 to 100-3 to communicate with the base-station device 200.

When the terminal devices 100-1 to 100-3 are positioned out of the communication area of the base-station device 200, the terminal devices 100-1 to 100-3 perform V2V communication in mode 4. The following second embodiment is described based on a case where urgent data occurs in the terminal device 100-1 performing V2V communication in mode 4.

### <Process at Occurrence of Urgent Data>

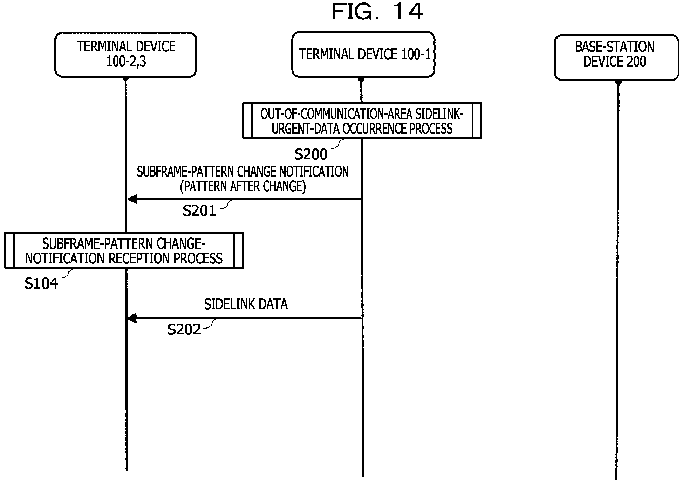

FIG. 14 illustrates an example of a sequence at the time when urgent data occurs in the terminal device 100-1 in the second embodiment.

When urgent data for sidelink occurs in the terminal device 100-1, the terminal device 100-1 performs an out-of-communication-area sidelink-urgent-data occurrence process (S200).

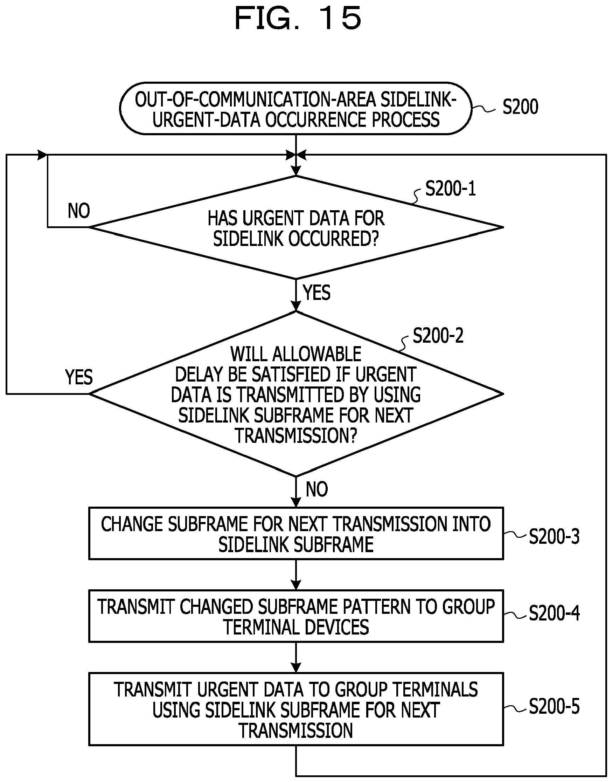

FIG. 15 illustrates an example of a flowchart of the out-of-communication-area sidelink-urgent-data occurrence process S200. The terminal device 100 listens for an occurrence of urgent data for sidelink (No at S200-1).

When urgent data for sidelink occurs in the terminal device 100 (Yes at S200-1), the terminal device 100 determines whether it is possible to satisfy the allowable delay for the urgent data even if the urgent data is transmitted by using the sidelink subframe for the next transmission (S200-2).

In the case where the terminal device 100 determines that the allowable delay will be satisfied (Yes at S200-2), the terminal device 100 returns to the listening process S200-1.

In the case where the terminal device 100 determines that the allowable delay will not be satisfied (No at S200-2), the subframe that the terminal device 100 uses for the next transmission is changed into a sidelink subframe (S200-3).

Then, the terminal device 100 notifies the group terminals of a changed subframe pattern (S200-4), uses the sidelink subframe for the next transmission to transmit the urgent data to the group terminals (S200-5), and returns to the listening process S200-1.

With reference to the sequence of FIG. 14 again, the terminal device 100-1, in the out-of-communication-area sidelink-urgent-data occurrence process S200, determines that the allowable delay will not be satisfied if the urgent data is transmitted in the sidelink subframe for the next transmission (No at S200-2 in FIG. 15). Then, the terminal device 100-1 changes the subframe that the terminal device 100-1 uses for the next transmission into a sidelink subframe (S200-3 in FIG. 15) and notifies the terminal devices 100-2 and 100-3 of a changed subframe pattern (S201, S200-4 in FIG. 15).

The terminal devices 100-2 and 100-3, receiving a subframe-pattern change notification (S201), performs the subframe-pattern change-notification reception process S104 and start receiving sidelink subframes, using the subframe pattern after the change (S104-3 in FIG. 9).

Then, the terminal device 100-1 uses the sidelink subframe for the next transmission in the changed subframe pattern to transmit the urgent data to the terminal devices 100-2 and 100-3 (S202, S200-5 in FIG. 15).

In the second embodiment, when urgent data occurs in the terminal device 100-1, the terminal device 100-1 allocates a new sidelink subframe for the urgent data and uses the allocated new sidelink subframe to transmit the urgent data. This configuration enables the terminal device 100-1 to transmit urgent data at an early timing and avoid transmission delay of data even if the terminal device 100-1 is positioned out of the communication area and unable to communicate with the base-station device 200.

### [Third Embodiment]

Next, a third embodiment is described below.

In the third embodiment, as in the second embodiment, the terminal devices 100-1 to 100-3 are not positioned within the communication area A200 of the base-station device 200. Hence, the terminal devices 100-1 to 100-3 perform V2V communication in mode 4. The following third embodiment is described based on a case where urgent data occurs in the terminal device 100-2 performing V2V communication in mode 4.

### <Regarding Leader Terminal>

In the third embodiment, at least one terminal device 100 of the terminal devices 100 performing V2V communication serves as a leader terminal. The leader terminal is a terminal device 100 that, when performing V2V communication in mode 4, allocates sidelink subframes, substituting for the base-station device 200. For the leader terminal, for example, the terminal device 100 that moved out of the communication area at the earliest time is selected. The leader terminal may be selected in advance. As another alternative, the terminal device having the largest average reception strength of radio waves from the group terminals may be selected for the leader terminal. As another alternative, the leader terminal may be selected arbitrarily. The following description is based on a case where the terminal device 100-1 has been selected for the leader terminal.

### <Process at Occurrence of Urgent Data>

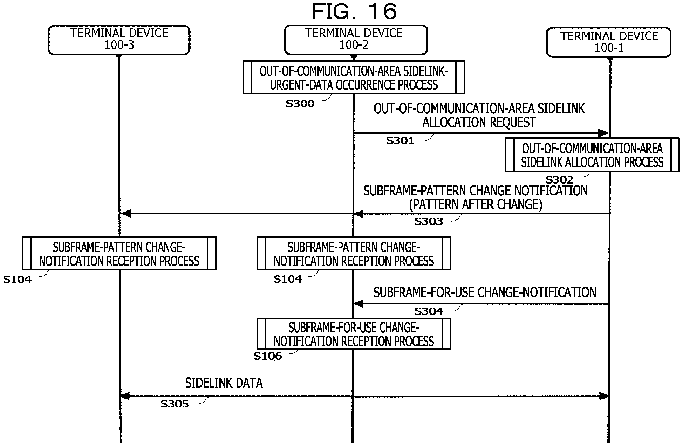

FIG. 16 illustrates an example of a sequence at the time when urgent data occurs in the terminal device 100-2 in the third embodiment.

When urgent data for sidelink occurs in the terminal device 100-2, the terminal device 100-2 performs an out-of-communication-area sidelink-urgent-data occurrence process (300).

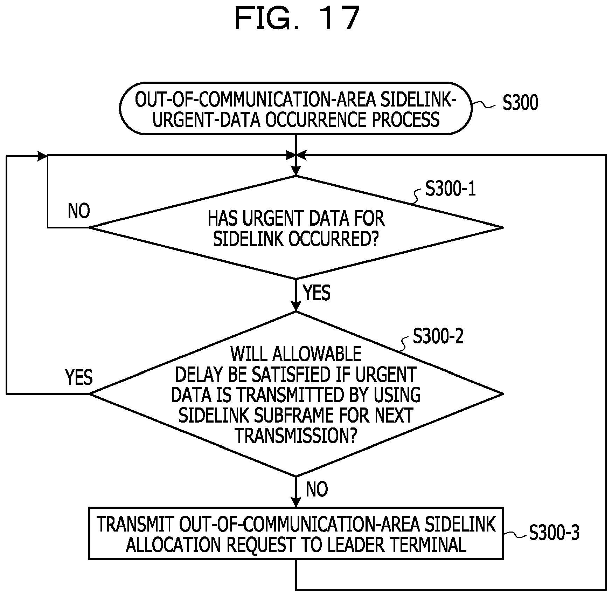

FIG. 17 illustrates an example of a flowchart of the out-of-communication-area sidelink-urgent-data occurrence process S300. The terminal device 100 listens for an occurrence of urgent data for sidelink (No at S300-1).

When urgent data for sidelink occurs in the terminal device 100 (Yes at S300-1), the terminal device 100 determines whether it is possible to satisfy the allowable delay for the urgent data even if the urgent data is transmitted by using the sidelink subframe for the next transmission (S300-2).

In the case where the terminal device 100 determines that the allowable delay will be satisfied (Yes at S300-2), the terminal device 100 returns to the listening process S300-1.

In the case where the terminal device 100 determines that the allowable delay will not be satisfied (No at S300-2), the terminal device 100 transmits an out-of-communication-area sidelink allocation request to the leader terminal (S300-3) and returns to the listening process S300-1.

The out-of-communication-area sidelink allocation request is a message for requesting the leader terminal to allocate a new sidelink subframe (change a subframe for terminal-to-base station communication into a sidelink subframe). The out-of-communication-area sidelink allocation request message may include, for example, contents the same as or similar to those of the sidelink allocation request in the first embodiment.

With reference to the sequence of FIG. 16 again, when the terminal device 100-2, in the out-of-communication-area sidelink-urgent-data occurrence process S300, determines that the allowable delay will not be satisfied if the urgent data is transmitted in the sidelink subframe for the next transmission (No at S300-2 in FIG. 17), the terminal device 100-2 transmits an out-of-communication-area sidelink allocation request to the terminal device 100-1, which is the leader terminal (S301, S300-3 in FIG. 17).

The terminal device 100-1, receiving the out-of-communication-area sidelink allocation request (S301), performs an out-of-communication-area sidelink allocation process (S302).

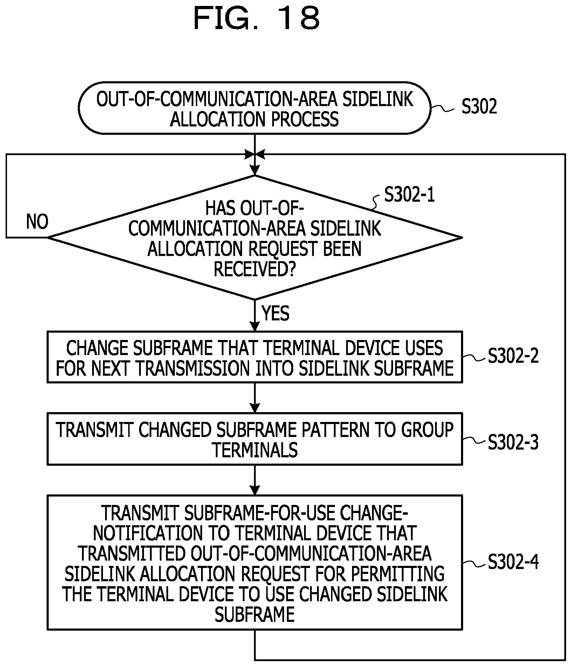

FIG. 18 illustrates an example of a flowchart of the out-of-communication-area sidelink allocation process S302. The leader terminal listens for an out-of-communication-area sidelink allocation request (No at S302-1).

The leader terminal, receiving the out-of-communication-area sidelink allocation request (Yes at S302-1), changes the subframe that the terminal device 100 uses for the next transmission into a sidelink subframe (S302-2).

Then, the leader terminal notifies the group terminals of a changed subframe pattern (S302-3). The leader terminal also transmits a subframe-for-use change-notification to permit the terminal device 100 that transmitted the out-of-communication-area sidelink allocation request to use the changed sidelink subframe (S302-4) and returns to the listening process S302-1.

With reference to the sequence of FIG. 16 again, the terminal device 100-1 notifies the terminal devices 100-2 and 100-3 of the subframe pattern in which the subframe that the terminal device 100-2 uses for the next transmission has been changed to a sidelink subframe in the out-of-communication-area sidelink allocation process S302 (S302-2 in FIG. 18) (S303, S302-3 in FIG. 18).

The terminal devices 100-2 and 100-3, receiving the subframe-pattern change notification (S303), performs the subframe-pattern change-notification reception process S104. The terminal devices 100-2 and 100-3, in the subframe-pattern change-notification reception process S104, start receiving sidelink subframes, using the subframe pattern after the change (S104-3 in FIG. 9).

Then, the terminal device 100-1 transmits a subframe-for-use change-notification to permit use of the newly set sidelink subframe to the terminal device 100-2 (S304, S302-4 in FIG. 18). The terminal device 100-2, receiving the subframe-for-use change-notification (S304), performs the subframe-for-use change-notification reception process S106.

The terminal device 100-2, in the subframe-for-use change-notification reception process S106, uses the sidelink subframe in the changed subframe pattern to transmit the urgent data to the terminal devices 100-1 and 100-3 (S305, S106-3 in FIG. 10).

In the third embodiment, when urgent data occurs in the terminal device 100-2, the terminal device 100-2 requests the leader terminal to allocate a sidelink subframe for the urgent data and then uses an allocated sidelink subframe to transmit the urgent data. Since the leader terminal selected from a plurality of terminal devices 100 performing V2V communication substitutes for the base-station device 200 and performs the processes of the base-station device 200, it is possible for the terminal devices 100 other than the leader terminal to transmit urgent data in a process the same as or similar to mode 3 by changing the transmission destination of the request message from the base-station device 200 to the leader terminal.

In the second and third embodiments, in the case where variable UL symbols, subframes, and flexible symbols being used for sidelink are changed, new SCI is communicated to the terminal devices 100. The following describes an example of new SCI.

### transmission Resource and MCS (Related to PSSCH (Data))>

- MCS (5 bits): use existing 5-bit uplink MCS tables; Modulation and coding scheme
- Time gap between initial transmission and retransmission (4 bits): Indicate a value in [0,15]
- Retransmission index (1 bit): index the re-transmission of V2V data
- Frequency resource location of the initial transmission and retransmission (8 bits): indicate the frequency resource
- Resource reservation (4 bits): for the next transport block (TB) (set to 0 for mode 3)
- Priority (3 bits): related to the V2V data priority
- Reserved information bits
- Transmission format- 1 bit, where value 1 indicates a transmission format including rate-matching and TBS scaling, and value 0 indicates a transmission format including puncturing and no TBS-scaling. This field is only present if the transport mechanism selected by higher layers indicates the support of rate matching and TBS scaling.
- Resource indication for changing UL symbols/subframe and or flexible symbols for sidelink

After this new SCI is transmitted, the terminal devices 100 are notified of UL symbols/subframe and/or flexible symbols for sidelink. The terminal device 100 on the transmission side includes time-domain resource allocation information for notifying the terminal device 100 on the reception side so that the sidelink transmission may be started and finished flexibly within the duration of the foregoing changed UL symbols and/or flexible symbols.

### [Fourth Embodiment]

Next, a fourth embodiment is described below.

In the fourth embodiment, as in the first embodiment, the terminal devices 100-1 to 100-3 are positioned within the communication area A200 of the base-station device 200. In the fourth embodiment, allocation of slots is described.

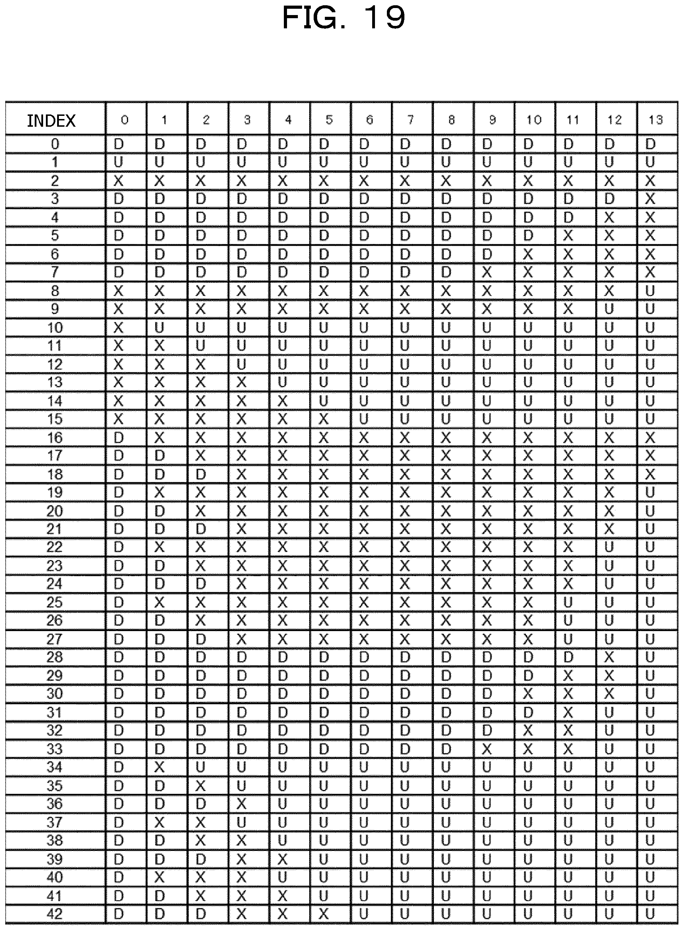

FIG. 19 illustrates an example of symbols included in one slot. The letters "D", "U", and "X" indicate a downlink symbol, an uplink symbol, and a flexible symbol, respectively. A flexible symbol, for example, may be switched among the downlink symbol, uplink symbol, and sidelink symbol when used. The switching may be made, for example, according to control information (for example, DCI format) transmitted from the base-station device 200. The numbers "0" to "42" in the left axis of FIG. 19 indicate index numbers. The numbers "0" to "13" in the upper axis of FIG. 19 indicate symbol numbers in one slot. Hereinafter, in some cases, the index having an index number of y (y is an integer) is expressed as index y, and the symbol having a symbol number of z (z is an integer) is expressed as symbol z.

Note that the base-station device 200 may notify the terminal devices 100-1 to 100-3 of an index illustrated in FIG. 19, for example, at step S103 described with reference to FIG. 6.

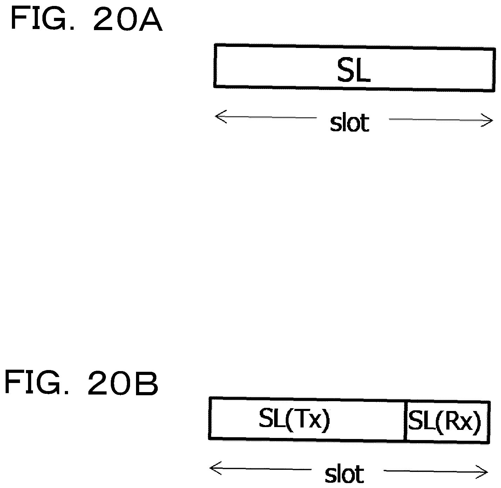

The base-station device 200 may notify the terminal devices 100-1 to 100-3 of sidelink symbols at step S105 described with reference to FIG. 6. For example, the base-station device 200 may instruct the terminal device 100-1 to use symbols of "U" and "X" for sidelink communication in a specified slot. Although in the above, an example for the case of "U" and "X" is mentioned, only one of "D", "U", or "X" is changed. For example, in a possible configuration, "D", "U", and "X" are expressed with 3 bits, and in the case of "011", "U" and "X" are changed to sidelink symbols. Here, in the case where "D" is changed into a sidelink symbol, effects to other downlink communications have to be considered. As illustrated in FIG. 20(A), for example, "Us" in index "1" in FIG. 19 may be changed into sidelink symbols, or "Xs" in index "2" in FIG. 19 may be changed into sidelink symbols so that the entire one slot may be used as sidelink symbols. As illustrated in FIG. 20(B), the terminal device 100-1 may separate a slot into resources for transmission and resources for reception on the time axis.

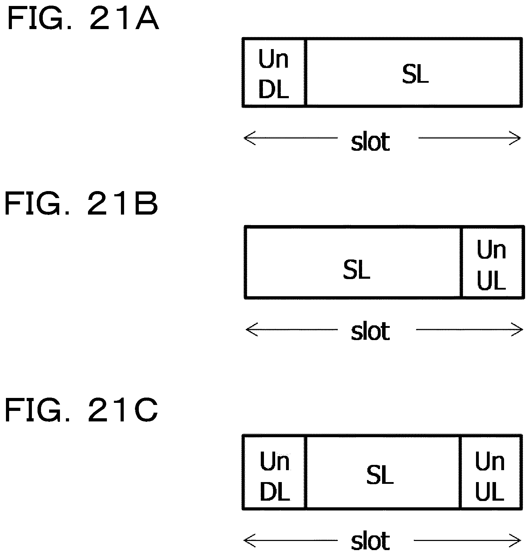

As in the slot configuration examples illustrated in FIG. 21(A) to 21(C), a slot configuration in which one slot includes at least one of a sidelink symbol (SL), a downlink symbol (UnDL), and an uplink symbol is possible. For example, the slot configuration in FIG. 21(C) may be obtained by changing "Xs" in index "27" in FIG. 19 into sidelink symbols.

Although the fourth embodiment is described based on the first embodiment, the fourth embodiment may also be adapted to the second embodiment and the third embodiment.

For example, in the case where the terminal device 100-1 has information illustrated in FIG. 19, the fourth embodiment may be adapted by changing symbols of at least one of "U" and "X" into sidelink symbols.

### [Other Embodiments]

Processes in each embodiment may be combined with those in another embodiment.

For example, in the case where urgent data occurs when the terminal device 100 is out of the communication area, the terminal device 100 may select the processes in the second or the processes in the third embodiment.

In each embodiment, the resource pool may be changed as a bandwidth part (BWP). A bandwidth part is a set of contiguous physical resource blocks selected from a subset of contiguous common resource blocks for quantification on a given NR carrier. Since an NR carrier is large, for example, it has been agreed in 5G that an NR broadband carrier is divided into several BWPs. For example, one BWP may be used as one resource pool. A plurality of resource pools may be set to one BWP.

Although the first, second, and third embodiments are described based on subframes, those embodiments may be based on slots. Although some part of the above description is based on a subframe composed of 14 symbols, the number of symbols may be a value in multiples of 14 (for example, 28 symbols in one subframe). Radio resource for sidelink may be allocated by performing in the unit of a BWP. The terminal device 100, for example, in mode 4, may determine resources to be used from the resources included in the BWP.

### REFERENCE SIGNS LIST

10 COMMUNICATION SYSTEM
100 TERMINAL DEVICE
110 CPU
120 STORAGE
121 TERMINAL-TO-BASE STATION COMMUNICATION PROGRAM
122 TERMINAL-TO-TERMINAL COMMUNICATION PROGRAM
130 MEMORY
150 RF CIRCUIT
200 BASE-STATION DEVICE
210 CPU
220 STORAGE
221 TERMINAL-TO-BASE STATION COMMUNICATION CONTROL PROGRAM
222 TERMINAL-TO-TERMINAL COMMUNICATION CONTROL PROGRAM
230 MEMORY
250 RF CIRCUIT

### CITATION LIST

### NON PATENT LITERATURE

NPL 1: 3GPP TS 22.186 V15.2.0 (2017-09)
NPL 2: 3GPP TS 36.211 V15.1.0 (2018-03)
NPL 3: 3GPP TS 36.212 V15.1.0 (2018-03)
NPL 4: 3GPP TS 36.213 V15.1.0 (2018-03)
NPL 5: 3GPP TS 36.300 V15.1.0 (2018-03)
NPL 6: 3GPP TS 36.321 V15.1.0 (2018-03)
NPL 7: 3GPP TS 36.322 V15.0.1 (2018-04)
NPL 8: 3GPP TS 36.323 V14.5.0 (2017-12)
NPL 9: 3GPP TS 36.331 V15.1.0 (2018-03)
NPL 10: 3GPP TS 36.413 V15.1.0 (2018-03)
NPL 11: 3GPP TS 36.423 V15.1.0 (2018-03)
NPL 12: 3GPP TS 36.425 V14.1.0 (2018-03)
NPL 13: 3GPP TS 37.340 V15.1.0 (2018-03)
NPL 14: 3GPP TS 38.201 V15.0.0 (2017-12)
NPL 15: 3GPP TS 38.202 V15.1.0 (2018-03)
NPL 16: 3GPP TS 38.211 V15.1.0 (2018-03)
NPL 17: 3GPP TS 38.212 V15.1.1 (2018-04)
NPL 18: 3GPP TS 38.213 V15.1.0 (2018-0312)
NPL 19: 3GPP TS 38.214 V15.1.0 (2018-03)
NPL 20: 3GPP TS 38.215 V15.1.0 (2018-03)
NPL 21: 3GPP TS 38.300 V15.1.0 (2018-03)
NPL 22: 3GPP TS 38.321 V15.1.0 (2018-03)
NPL 23: 3GPP TS 38.322 V15.1.0 (2018-03)
NPL 24: 3GPP TS 38.323 V15.1.0 (2018-03)
NPL 25: 3GPP TS 38.331 V15.1.0 (2018-03)
NPL 26: 3GPP TS 38.401 V15.1.0 (2018-03)
NPL 27: 3GPP TS 38.410 V0.9.0 (2018-04)
NPL 28: 3GPP TS 38.413 V0.8.0 (2018-04)
NPL 29: 3GPP TS 38.420 V0.8.0 (2018-04)
NPL 30: 3GPP TS 38.423 V0.8.0 (2018-04)
NPL 31: 3GPP TS 38.470 V15.1.0 (2018-03)
NPL 32: 3GPP TS 38.473 V15.1.1 (2018-04)
NPL 33: 3GPP TR 38.801 V14.0.0 (2017-04)
NPL 34: 3GPP TR 38.802 V14.2.0 (2017-09)
NPL 35: 3GPP TR 38.803 V14.2.0 (2017-09)
NPL 36: 3GPP TR 38.804 V14.0.0 (2017-03)
NPL 37: 3GPP TR 38.900 V14.3.1 (2017-07)
NPL 38: 3GPP TR 38.912 V14.1.0 (2017-06)
NPL 39: 3GPP TR 38.913 V14.3.0 (2017-06)

## Claims

1. A terminal device in a communication system including the terminal device, another terminal device, and a base-station device that performs terminal-to-base station communication with the terminal device and the other terminal device, comprising:
a terminal-to-terminal communication unit that executes terminal-to-terminal communication for communicating with the other terminal device by using a radio resource for the terminal-to-terminal communication;
a terminal-to-base station communication unit that executes the terminal-to-base station communication by using a radio resource for the terminal-to-base station communication other than the radio resource for the terminal-to-terminal communication; and
a control unit that controls the terminal-to-terminal communication unit such that when the terminal device has first data that is to be transmitted to the other terminal device within a specified time period in the terminal-to-terminal communication, the terminal-to-terminal communication unit transmits the first data to the other terminal device by using a radio resource changed from the radio resource for the terminal-to-base station communication to the radio resource for the terminal-to-terminal communication.

2. The terminal device according to claim 1, wherein
when the terminal device has the first data, the control unit controls the terminal-to-base station communication unit such that the terminal-to-base station communication unit transmits a change request for changing the radio resource for the terminal-to-base station communication to the radio resource for the terminal-to-terminal communication to the base-station device that performs the terminal-to-base station communication, and
the terminal-to-base station communication unit obtains, from the base-station device, information on a radio resource changed by the base-station device in response to the change request.

3. The terminal device according to claim 1, wherein the change is made in a unit of a slot.

4. The terminal device according to claim 1, wherein the change is made in a unit of a symbol included in a slot.

5. The terminal device according to claim 1, wherein the radio resource for the terminal-to-base station communication on which the change is made includes a radio resource to be used for transmission to the base-station device.

6. The terminal device according to claim 1, wherein the radio resource for the terminal-to-base station communication on which the change is made includes a radio resource to be used for reception from the base-station device.

7. The terminal device according to claim 1, wherein the radio resource for the terminal-to-base station communication on which the change is made includes a radio resource allowed to be used for at least one of reception from the base-station device and transmission to the base-station device.

8. The terminal device according to claim 2, wherein
when the terminal device has the first data, the control unit, in a case where the terminal device is unable to perform the terminal-to-base station communication with the base-station device, changes at least one of the radio resources for the terminal-to-base station communication into the radio resource for the terminal-to-terminal communication, and
the terminal-to-terminal communication unit notifies the other terminal device of information on the changed radio resource.

9. The terminal device according to claim 2, wherein
when the terminal device has the first data, the control unit, in a case where the terminal device is unable to perform the terminal-to-base station communication with the base-station device, controls the terminal-to-terminal communication unit such that the terminal-to-terminal communication unit transmits the change request to the other terminal device, and
the terminal-to-terminal communication unit obtains, from the other terminal device, information on a radio resource changed by the other terminal device in response to the change request.

10. A base-station device in a communication system including a terminal device, another terminal device, and the base-station device which performs terminal-to-base station communication with the terminal device and the other terminal device, comprising:
a terminal-to-terminal communication control unit that controls terminal-to-terminal communication with which the terminal device and the other terminal device communicate with each other by using a radio resource for the terminal-to-terminal communication; and
a terminal-to-base station communication control unit that executes the terminal-to-base station communication by using a radio resource for the terminal-to-base station communication other than the radio resource for the terminal-to-terminal communication, wherein
the terminal-to-base station communication control unit receives, from the terminal device, a change request for changing the radio resource for the terminal-to-base station communication to the radio resource for the terminal-to-terminal communication, the change request being transmitted when the terminal device has first data to be transmitted from the terminal device to the other terminal device within a specified time period in the terminal-to-terminal communication, and
when the terminal-to-base station communication control unit receives the change request, the terminal-to-terminal communication control unit changes at least one of the radio resources for the terminal-to-base station communication into the radio resource for the terminal-to-terminal communication, notifies the terminal device and the other terminal device of information on the changed radio resource, and permits the terminal device to use the changed radio resource.

11. A communication system comprising: a terminal device; another terminal device; and a base-station device configured to perform terminal-to-base station communication with the terminal device and the other terminal device, wherein
when the terminal device has first data that is to be transmitted to the other terminal device within a specified time period in terminal-to-terminal communication with which the terminal device communicates with the other terminal device by using a radio resource for the terminal-to-terminal communication, the terminal device transmits, to the base-station device, a change request for changing a radio resource for the terminal-to-base station communication to be used for the terminal-to-base station communication into the radio resource for the terminal-to-terminal communication,
in response to the change request, the base-station device changes at least one of the radio resources for the terminal-to-base station communication into the radio resource for the terminal-to-terminal communication, notifies the terminal device and the other terminal device of information on the changed radio resource, and permits the terminal device to use the changed radio resource, and
the terminal device transmits the first data to the other terminal device by using the radio resource that the terminal device is permitted to use.
